# EUROPEAN PATENT APPLICATION

(11) **EP 3 435 603 A1**
(43) Date of publication of application: **30.01.2019**
(21) Application number: 17770174.5
(22) Date of filing: 17.03.2017
(51) Int. Cl.: H04L 12/749, H04L 12/24, H04L 12/46, H04L 12/70, H04L 29/12

(54) **MANAGEMENT DEVICE, L3CPE, AND CONTROL METHOD THEREFOR**

(30) Priority: 23.03.2016 JP 2016057759
(71) Applicant: NEC Corporation, Tokyo 108-8001 (JP)
(72) Inventor: FUJII Satoru, Tokyo 108-8001 (JP)
(74) Representative: Reeve, Nicholas Edward
(86) International application number: PCT/JP2017/010991
(87) International publication number: WO 2017/164132

(57) **Abstract**

[Problem] To contribute to the assurance of IP reachability from an ACS to an L2CPE, in a communication system which includes an L2CPE arranged on an in-home network, an L3CPE that performs address conversion processing in L3 between the in-home network and a communication carrier network, and an ACS that is arranged on the communication carrier network and that manages L2CPE.

[Solution] A management device installed on a communication carrier network: receives, from an L2CPE via an L3CPE, a connection establishment message which includes a local address of the L2CPE used to access the L2CPE from the ACS; sets, in respect to the L3CPE, a correspondence between the L2CPE local address and a global address of the communication carrier network used to convert an address to the local address; and transfers, to the ACS, the message changed such that the local address included in the received message corresponds to a port-mapped global address.

## Description

### [Technical Field]

The present invention relates to a management apparatus, an L3CPE, and a control method therefor.

### [Background Art]

As a method for connecting to the Internet from an in-home network via a communication carrier network, there is a method in which Customer Premises Equipment (CPE) is installed on the in-home (residential) network and the CPE is operated as a gateway (i.e., a Home Gateway (HGW)) between the in-home network and the communication carrier network.

The CPE is managed by an Auto Configuration Server (ACS) in accordance with a CPE WAN Management Protocol (CWMP) of Technical Report 069 (TR-069) (NPL 1) which is defined in BroadBand Forum (BBF).

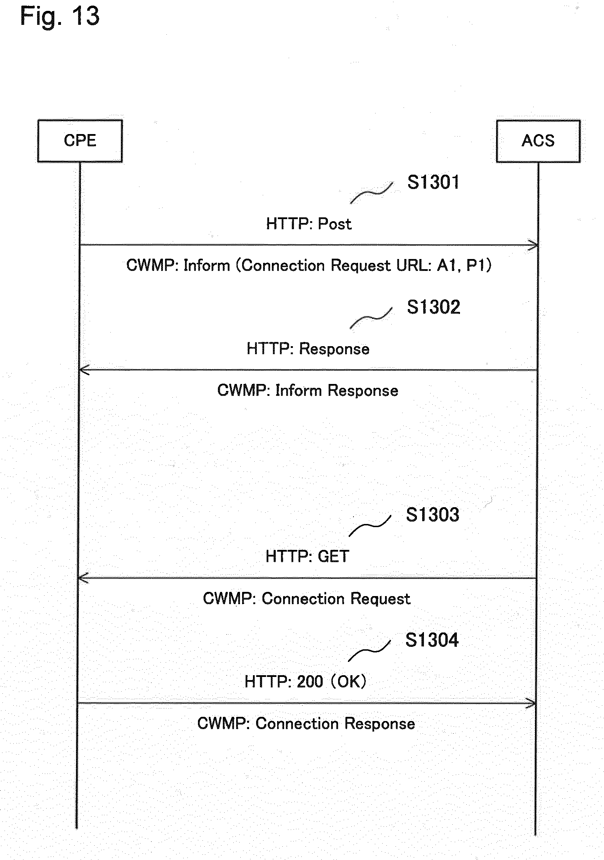

Fig. 13 is a sequence diagram illustrating an example of exchange of a message based on the CWMP between the CPE and the ACS.

The CPE uses CWMP: Inform, for example, when the CPE changes registered information about itself, or registers new information. The CPE illustrated in Fig. 13 transmits, to the ACS, a CWMP: Inform message (hereinafter referred to as an Inform message) (S1301). Hypertext Transfer Protocol (HTTP): Post is used to transmit the Inform message. In this case, the CPE transmits the Inform message including a Uniform Resource Locator (URL) (ConnectionRequestURL) for the CPE which is necessary at the time of a connection (or a session) request from the ACS. The URL used herein is, for example, a (local) Internet Protocol (IP) address and a port number of the CPE. Next, the ACS transmits a CWMP: Inform Response message (hereinafter referred to as an Inform Response message) to the CPE in response to the Inform message received from the CPE (S1302). HTTP: Response is used to transmit the Inform Response message. For example, when processing requested from the CPE is successful, the ACS transmits HTTP: 200 (OK).

On the other hand, when a connection is requested from the ACS to the CPE, a CWMP: Connection Request message (hereinafter referred to as a Connection Request message) is transmitted (S1303). HTTP: GET is used to transmit the Connection Request message. As a URL for a connection destination CPE that is included in the Connection Request message, ConnectionRequestURL received in S1301 is used.
When authentication for the Connection Request message is successful, the CPE transmits HTTP: 200 (OK) (S1304). The message is exchanged between the CPE and the ACS in the manner as described above.

When the CPE is installed on a private network (e.g., an in-home network or a Local Area Network (LAN)), the CPE is disposed as, for example, an L3 router that is terminated in a Layer-3 (L3), and Network Address Translation (NAT) can be applied. The NAT is a technique for converting an IP address (i.e., a private IP address or a local IP address) and a port number, which are allocated on a private network (e.g., a Local Area Network (LAN)), into another IP address (i.e., a public IP address or a global IP address) and a port number. It is common to provide the CPE with a global IP address when the CPE is installed as described above and the NAT is applied.

The CPE provided with a global IP address has IP reachability from a side of the Internet including a communication carrier network. Accordingly, it is easy to perform management, such as maintenance, on the CPE, from the Internet side.

On the other hand, when the CPE having a NAT function is disposed as a gateway on the in-home network, an apparatus (e.g., a Personal Computer (PC) or a Set Top Box (STB)) or the like on the in-home network, which is located far from the CPE as viewed from the communication carrier, has no IP reachability from the communication carrier network.

PTL 1 discloses a technique for implementing a large number of functions of the CPE including the NAT on the communication carrier network by virtually implementing CPE functions (virtual CPE (vCPE)) in L3 and higher layers on the communication carrier network.

### [Citation List]

### [Non Patent Literature]

[NPL 1] "TR-069 CPE WAN Management Protocol", Issue: 1 Amendment 5, Issue Date: November 2013, CWMP Version: 1.4

### [Patent Literature]

[PTL 1] Specification of US Unexamined Patent Application Publication No. 2013/0173797
[PTL 2] International Publication No. WO 2007/102547

### [Summary of Invention]

### [Technical Problem]

Like in the technique disclosed in PTL 1, when functions in L3 and higher layers are transferred to the virtual CPE (vCPE) from the CPE installed on the in-home network, it is assumed that the CPE on the in-home network operates as a bridge mode. In this case, the CPE terminates a layer in L2 and lower layers, and operates with a private IP address without terminating processing in layers higher than L3 (i.e., operates as an L2CPE). Accordingly, in the L3 level, an apparatus on the communication carrier network, such as the ACS, cannot access an apparatus on the communication carrier network that is located close to the in-home network and far from the vCPE, or cannot access an apparatus on the in-home network (i.e., has no IP reachability), which causes a problem that it is difficult to remotely perform maintenance.

### <Object of the present invention>

The present invention has been made in view of the above-described circumstances, and an object of the present invention is to provide a management apparatus and the like which contribute to ensuring IP reachability to an L2CPE from a communication carrier network, such as an ACS, in a communication system including: the L2CPE disposed on an in-home network; an L3CPE installed on the communication carrier network and configured to perform address conversion processing in an L3 with the in-home network; and the ACS disposed on the communication carrier network and configured to manage the L2CPE. Note that this object is merely one of a plurality of objects to be attained by example embodiments disclosed herein. Other objects or problems, and novel features of the present invention will become apparent from the following description or the accompanying drawings.

### [Solution to Problem]

A first aspect of the present invention discloses a management apparatus that is installed on a communication carrier network in a communication system. The communication system includes Layer-2 Customer Premises Equipment (L2CPE) installed on an in-home network and configured to perform processing in a Layer-2 (L2) with the communication carrier network, Layer-3 CPE (L3CPE) installed on the communication carrier network and configured to perform address conversion processing in a Layer-3 (L3) with the in-home network, and Auto Configuration Servers (ACS) installed on the communication carrier network and configured to support a predetermined protocol for establishing a connection with the L2CPE. The management apparatus comprises: an interface configured to receive, in an in-home network, a message for establishing the connection from the L2CPE through the L3CPE, the message including a local address used for access to the L2CPE; and a processor configured to set, to the L3CPE, a correspondence between the local address and a global address of the communication carrier network used for the address conversion processing to the local address, wherein the interface changes the local address included in the message to the global address and transfers the message to the ACS.

A second aspect of the present invention discloses a control method for a management apparatus that is installed on a communication carrier network in a communication system. The communication system includes Layer-2 Customer Premises Equipment (L2CPE) installed on an in-home network and configured to perform processing in a Layer-2 (L2) with the communication carrier network, Layer-3 CPE (L3CPE) installed on the communication carrier network and configured to perform address conversion processing in a Layer-3 (L3) with the in-home network, and Auto Configuration Servers (ACS) installed on the communication carrier network and configured to support a predetermined protocol for establishing a connection with the L2CPE. The control method comprises: receiving, in an in-home network, a message for establishing the connection from the L2CPE through the L3CPE, the message including a local address used for access to the L2CPE; setting, to the L3CPE, a correspondence between the local address and a global address of the communication carrier network being used for the address conversion processing to the local address; and changing the local address included in the message to the global address and transferring the message to the ACS.

A third aspect of the present invention discloses a Layer-3 Customer Premises Equipment (L3CPE) that is installed on a communication carrier network in a communication system. The communication system includes Layer-2 Customer Premises Equipment (L2CPE) installed on an in-home network and configured to perform processing in a Layer-2 (L2) with the communication carrier network, and Auto Configuration Servers (ACS) installed on the communication carrier network and configured to support a predetermined protocol for establishing a connection with the L2CPE. The L3CPE comprises: an interface configured to receive, from the L2CPE, a message for establishing the connection, the message including a local address used for access to the L2CPE; and a processor configured to perform address conversion processing in a Layer-3 (L3) between the in-home network and the communication carrier network, wherein the interface receives, from a management apparatus installed between the ACS and the L3CPE, an instruction for setting a correspondence between the local address and a global address used for the address conversion processing to the local address.

A fourth aspect of the present invention discloses a control method for a Layer-3 Customer Premises Equipment (L3CPE) that is installed on a communication carrier network in a communication system. The communication system includes Layer-2 Customer Premises Equipment (L2CPE) installed on an in-home network and configured to perform processing in a Layer-2 (L2) with the communication carrier network, and Auto Configuration Servers (ACS) installed on the communication carrier network and configured to support a predetermined protocol for establishing a connection with the L2CPE. The control method comprises: receiving, from the L2CPE, a message for establishing the connection, the message including a local address used for access to the L2CPE; performing address conversion processing in a Layer-3 (L3) between the in-home network and the communication carrier network; and receiving, from a management apparatus installed between the ACS and the L3CPE, an instruction for setting a correspondence between the local address and a global address used for the address conversion processing to the local address.

### [Advantageous Effects of Invention]

It is possible to provide a management apparatus and the like which contribute to ensuring IP reachability to an L2CPE from a communication carrier network, such as an ACS, in a communication system including: the L2CPE disposed on an in-home network; an L3CPE installed on the communication carrier network and configured to perform address conversion processing in an L3 with the in-home network; and the ACS disposed on the communication carrier network and configured to manage the L2CPE.

### [Brief Description of Drawings]

Fig. 1 is a diagram illustrating a configuration example of a communication system according to a first example embodiment.
Fig. 2 is a diagram illustrating a configuration example of a communication system according to the first example embodiment.
Fig. 3 is a diagram illustrating a sequence of the communication system according to the first example embodiment.
Fig. 4 is a diagram illustrating a configuration example of a communication system according to a second example embodiment.
Fig. 5 is a diagram illustrating a sequence of the communication system according to the second example embodiment.
Fig. 6 is a block diagram illustrating a management apparatus according to some example embodiments.
Fig. 7 is a flowchart illustrating an operation of the management apparatus according to some example embodiments.
Fig. 8 is a block diagram illustrating a vCPE according to some example embodiments.
Fig. 9 is a flowchart illustrating an operation of the vCPE according to some example embodiments.
Fig. 10 is a block diagram illustrating an ACS according to some example embodiments.
Fig. 11 is a flowchart illustrating an operation of the ACS according to some example embodiments.
Fig. 12 is a diagram illustrating a configuration example of a server apparatus according to other example embodiments.
Fig. 13 is a diagram illustrating a sequence between the CPE and the ACS based on a CWMP.

### [Example Embodiment]

Example embodiments of the present invention will be described in detail below with reference to the drawings. In the drawings, identical or corresponding elements are denoted by the same reference numerals, and repeated explanations are omitted, unless necessary, for clarity of explanation.

A plurality of example embodiments to be described below can be independently carried out, or may be carried out in combination as needed. These plurality of example embodiments include novel features different from each other. Accordingly, these plurality of example embodiments contribute to solving objects or problems to be solved which are different from each other, and also contribute to obtaining advantageous effects different from each other.

### <First example embodiment>

### [Configuration]

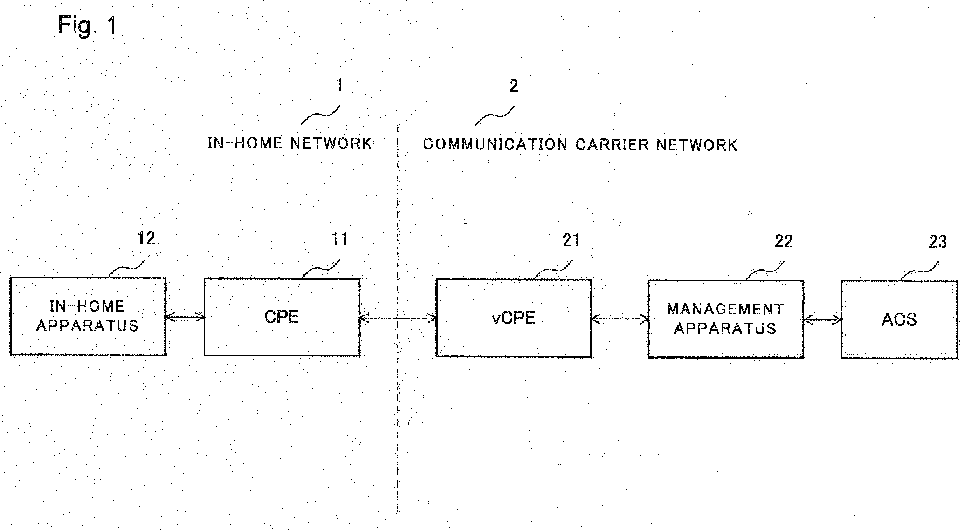

Fig. 1 illustrates a configuration example of a communication system according to some example embodiments including the present example embodiment. In the example of Fig. 1, the communication system includes an in-home network 1 and a communication carrier network 2.

The in-home network 1 includes a CPE 11 and an in-home apparatus 12. Description is provided assuming herein that the CPE 11 according to the present example embodiment conforms to TR-069, but instead the CPE 11 may conform to other standards. Further, the CPE 11 is preferably configured to operate in a bridge mode, specifically, configured to terminate processing in L2 and lower layers, without terminating processing in L3 and higher layers. Accordingly, the CPE 11 can also be referred to as an L2CPE. Note that the CPE 11 conforms to TR-069 as described above, and therefore the CPE 11 is provided with an IP address for management from an ACS 23, which is described below. The CPE 11 may be an HGW, a Home NodeB (HNB), or a Home eNodeB (HeNB), or may be a wireless LAN router.

The in-home apparatus 12 communicates with a node on the communication carrier network 2 or a network (not illustrated) higher than the communication carrier network 2 through the CPE 11. A plurality of in-home apparatuses 12 may be provided. For example, the in-home apparatus 12 may be at least one of a Personal Computer (PC) and a Set Top Box (STB). Further, the in-home apparatus 12 may be referred to as User Equipment (UE), a Mobile Terminal (MT), a Mobile Station (MS), or a Wireless Transmit Receive Unit (WTRU).

The communication carrier network 2 includes a vCPE 21, a management apparatus 22, and an ACS 23. In this case, the vCPE 21 is a node obtained by implementing at least some of functions of the CPE 11 on an information processing apparatus (e.g., a server) which is not illustrated and is disposed in the communication carrier network 2. The vCPE 21 can also be recognized as a virtual node including some of functions of the CPE of the related art, and thus is referred to as a virtual CPE (vCPE). Examples of at least some of the functions described herein include a function for terminating processing in L3 and higher layers, and an address conversion processing function (such as Network Address Translation (NAT) for converting an IP address, a port mapping processing function for converting a pair of an IP address and a port number, and an IP masquerade function). When the vCPE 21 includes a function (such as NAT) of L3 as illustrated above, the vCPE 21 can also be referred to as an L3CPE.

Address conversion processing implemented by the vCPE 21 is, for example, an IP address conversion (e.g., Network Address Translation: NAT, Network Address Port Translation: NAPT). Specifically, the vCPE 21 has a function for converting a local address (a local IP address in NAT, or a local IP address and a port number in NAPT) allocated to each apparatus on the in-home network 1 into a global address (a global IP address in NAT, or a global IP address and a port number in NAPT) allocated to the communication carrier network 2. Further, processing for mapping (converting) a specific port of the global IP address into a specific port of the local IP address is also referred to as port mapping processing.

The vCPE 21 is communicably connected to the CPE 11 on the in-home network 1. Examples of a protocol used herein for communication include an HTTP and a Hypertext Transfer Protocol Secure (HTTPS).

The management apparatus 22 is communicably connected to the vCPE 21, and manages a setting for address conversion processing processed by the vCPE 21. The address conversion processing may be any one of NAT, NAPT, a port mapping processing function, an IP masquerade function, and the like. However, port mapping processing is described below by way of example. More specifically, for example, exchange of a message defined by a Port Control Protocol (PCP) enables the management apparatus 22 to acquire a setting for port mapping or make an instruction for the vCPE 21. Note that other protocols such as HTTP may be used for communication between the management apparatus 22 and the vCPE 21. Furthermore, the management apparatus 22 may include a display unit or a display apparatus for displaying, for a user, a management screen for processing in L3 and higher layers, including a setting for port mapping, and an input interface (not illustrated) for receiving an input of the setting for port mapping from the user. An example of the display unit or the display apparatus is a display, but is not limited to this. An example of the input interface is a touch panel, but is not limited to this. Note that the management apparatus 22 may be referred to as a Web Portal. Further, as the Web Portal, it is preferable to operate as a TR-069 proxy with a formal certificate. Further, the management apparatus 22 includes a database implemented in a memory, which is not illustrated. The management apparatus 22 may be configured to store, in the database, a Public IP, a Tunnel ID, a CPE Manufacturer Organizationally Unique Identifier (OUI), a CPE serial Number, a subscriber ID, and the like, and retrieve the database for operation.

The ACS 23 manages the CPE 11. More specifically, for example, the ACS 23 controls and manages the CPE 11 (e.g., establishes a CWMP connection (or a session; the same applies hereinafter)) by using a Simple Object Access Protocol (SOAP) or HTTP according to the CWMP of TR-069. The ACS 23 according to the present example embodiment is also communicably connected to the management apparatus 22 by using a predetermined protocol such as an HTTP.

Note that the configuration of the communication system according to the present example embodiment is not limited to the configuration described above, but instead may include other apparatuses.

### [Operation]

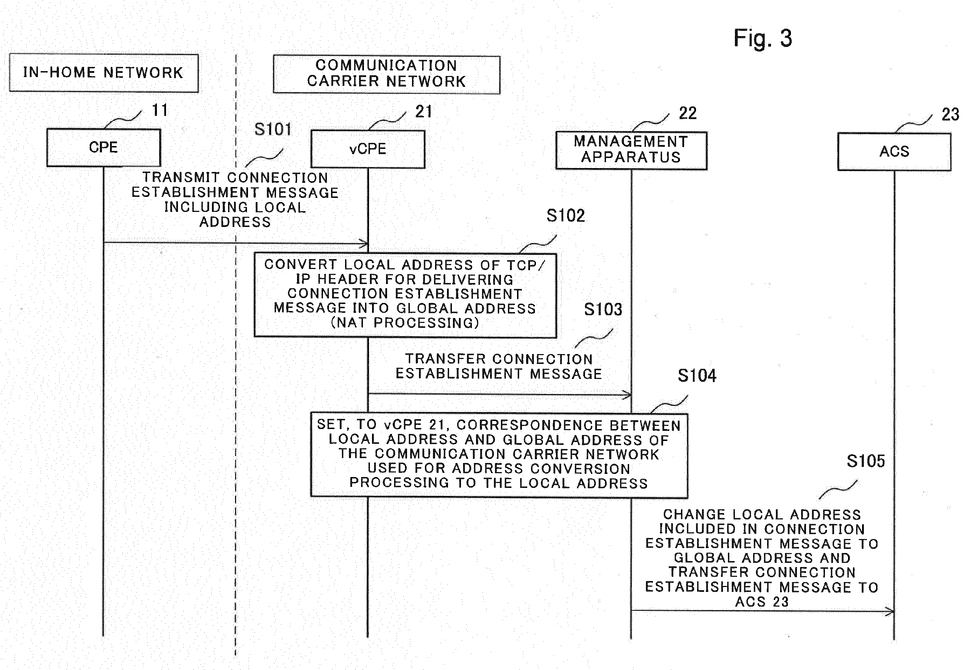

Next, an example of an operation of the communication system illustrated in Fig. 1 will be described by using a sequence diagram illustrated in Fig. 3.

The CPE 11 transmits a connection establishment message to the ACS 23 in order to establish a connection with the ACS 23 (S101). This connection establishment message includes a local address (a local address of the CPE 11, or a URL corresponding to the local address) used for access from the ACS 23 to the CPE 11 (e.g., a connection request by CWMP: Connection Request). Note that the local address included herein is an address allocated from a Dynamic Host Configuration Protocol (DHCP) server 34. In the case of the system of the related art, a global IP address is allocated and the global IP address can be used as it is for management from the ACS 23. In addition to the local address, a subscriber ID, identification information about the CPE 11 (e.g., CPE Serial Number and CPE Manufacturer OUI), or the like can also be included in the connection establishment message. When the CWMP of TR-069 is applied to this communication system, this connection establishment message is, for example, CWMP: Inform. Further, the local address can be included as, for example, ConnectionRequestURL, but is not limited to this. This connection establishment message can also be transmitted by using, for example, an HTTP.

The vCPE 21 receives the connection establishment message transmitted from the CPE 11, and converts (i.e., performs NAT processing) a transmission source local address stored in a header of a Transmission Control Protocol (TCP)/IP layer for delivering the connection establishment message into a global address (S102). After that, the vCPE 21 transfers the connection establishment message obtained by converting the address to the ACS 23 (S103).

Upon receiving the connection establishment message, the management apparatus 22 sets, to the vCPE 21, a correspondence between the local address and a global address of the communication carrier network that is used for address conversion processing to the local address (S104). More specifically, the management apparatus 22 uses the proxy function to terminate the connection establishment message for the ACS 23 transmitted from the vCPE 21, and makes, for the vCPE 21, a setting for fixed port mapping processing of the local address included in the connection establishment message and the global address obtained by conversion in the NAT processing of S102. Further, more specifically, the management apparatus 22 exchanges the message defined by the Port Control Protocol (PCP) with the vCPE 21, thereby making, for the vCPE 21, a setting for fixed port mapping of the local address included in the connection establishment message and the global address obtained by conversion in the NAT processing of S102. In this case, the management apparatus 22 may make an inquiry to the vCPE 21 about a subscriber ID, CPE Manufacturer OUI, CPE serial Number, or the like.

Further, the management apparatus 22 changes the local address included in the connection establishment message for the ACS 23 that is terminated by the proxy function in such a way as to correspond to the global address subjected to the address conversion processing in S104, and transfers the connection establishment message to the ACS 23 (S105).

### [Advantageous effects]

The configuration and operation described above enables the ACS 23 to transmit a connection request (e.g., CWMP: Connection Request) to the CPE 11 based on the global address included in the connection establishment message. Further, the connection request transmitted to the CPE 11 is subjected to fixed port mapping in a TCP/IP layer by the vCPE 21, and thus can reach the CPE 11 on the in-home network.

Consequently, reachability from the ACS 23 on the communication carrier network to the CPE 11 on the in-home network can be ensured.

### <Second example embodiment>

In the present example embodiment, a first detailed example of the communication system according to the first example embodiment will be described.

### [Configuration]

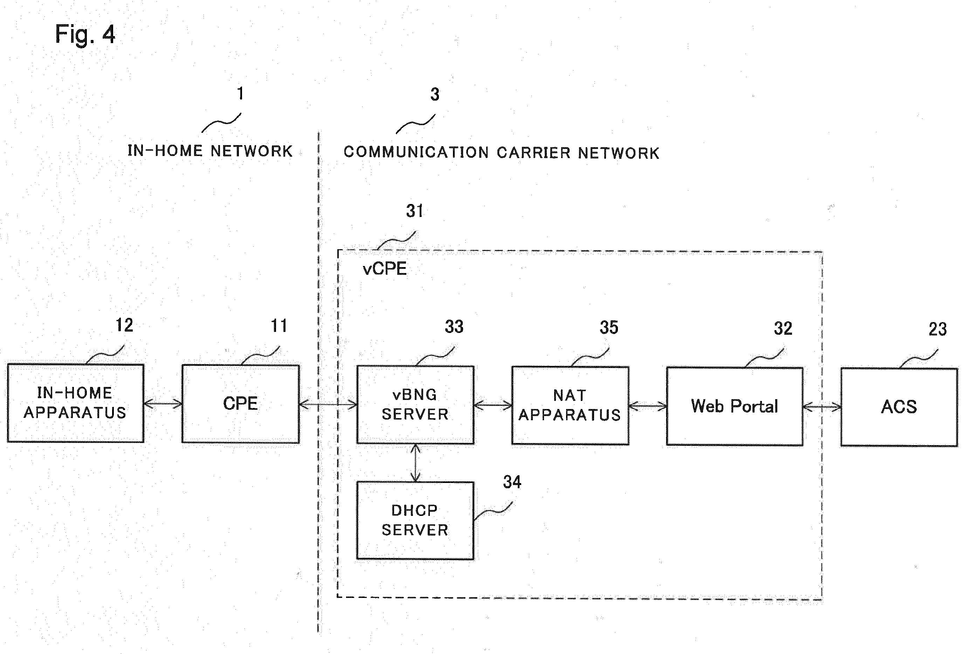

Fig. 4 is a diagram illustrating a configuration example of a communication system according to a second example embodiment. In the example of Fig. 4, the communication system includes an in-home network 1 and a communication carrier network 3. Note that the in-home network 1 is similar to that of the first example embodiment, and thus the description thereof is omitted.

The communication carrier network 3 includes a vCPE 31 and an ACS 23. Like in the first example embodiment, the vCPE 31 is a node obtained by implementing at least some of functions of a CPE 11 on an information processing apparatus (e.g., a server).

The vCPE 31 includes a Web Portal 32, a virtual Broadband Network Gateway (vBNG) server 33, a Dynamic Host Configuration Protocol (DHCP) server 34, and a NAT apparatus 35. For example, functions of the Web Portal 32, the vBNG server 33, the DHCP server 34, and the NAT apparatus 35 can be executed as applications on the vCPE 31. Note that the Web Portal 32 corresponds to the management apparatus 22 according to the first example embodiment.

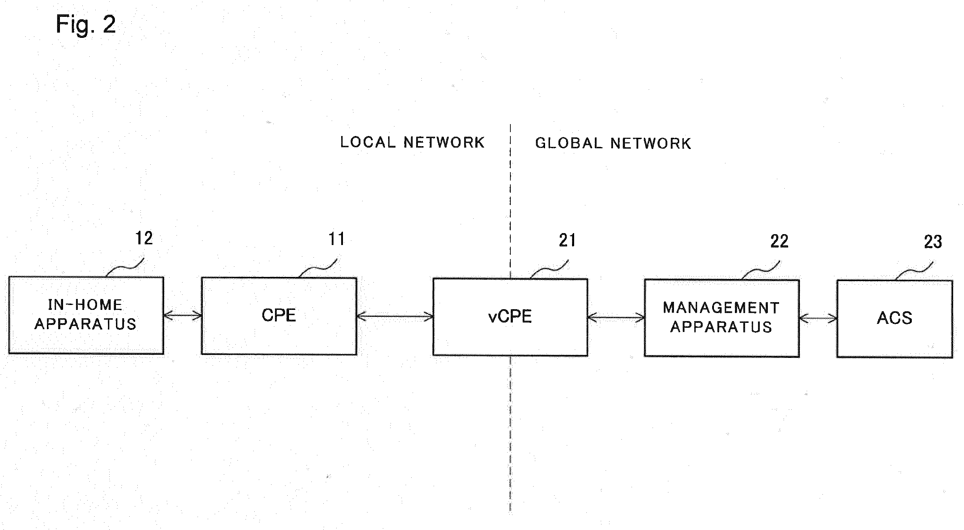

While the present example embodiment illustrates an example where the Web Portal 32 is included in the vCPE 31, the present invention is not limited to this example. For example, the Web Portal 32 may be an independent apparatus disposed outside the vCPE 31, like the management apparatus 22 illustrated in Fig. 1 or Fig. 2.

The Web Portal 32 according to the present example embodiment exchanges a message defined by the Port Control Protocol (PCP), thereby making it possible to acquire or instruct a setting for port mapping for the NAT apparatus 35, or acquire a subscriber ID. Accordingly, the Web Portal 32 can make a setting for port mapping for each subscriber. Further, like in the management apparatus 22 according to the first example embodiment, other protocols such as an HTTP may be used for communication between the Web Portal 32 and the NAT apparatus 35. Furthermore, the Web Portal 32 includes a display unit or a display apparatus (not illustrated) for displaying, for the user, a management screen for processing in L3 and higher layers including a setting for port mapping, and a database (not illustrated) implemented in the memory. In the database, a Public IP, a Tunnel ID, a CPE Manufacturer OUI, a CPE serial Number, a subscriber ID, and the like can be stored. The Web Portal 32 may be configured to retrieve the database for operation.

In addition, the Web Portal 32 according to the present example embodiment operates as a TR-069 proxy with a formal certificate.

The vBNG server 33 has a function for terminating a L2 network of the in-home network of a subscriber on a side of the communication carrier network, a function for relaying DHCP traffic to the DHCP server 34, a function for identifying a subscriber by an encapsulation protocol and then transmitting IPv4 traffic to the NAT apparatus 35, and the like. These functions can be implemented by, for example, Generic Routing Encapsulation (GRE) or Dual-Stack Lite (DS-Lite). The vBNG server 33 is communicably connected to the CPE 11, the NAT apparatus 35, and the DHCP server 34.

The DHCP server 34 is a server that automatically issues necessary information, such as an IP address, a lease period, a subnet mask, or a default gateway, when a certain information processing apparatus (DCHP client) is temporarily connected to a predetermined network. The DHCP server 34 is communicably connected to other apparatuses located at customer premises through the vBNG server 33.

Like the vCPE 21 according to the first example embodiment, the NAT apparatus 35 has an address conversion processing function and the like.

### [Operation]

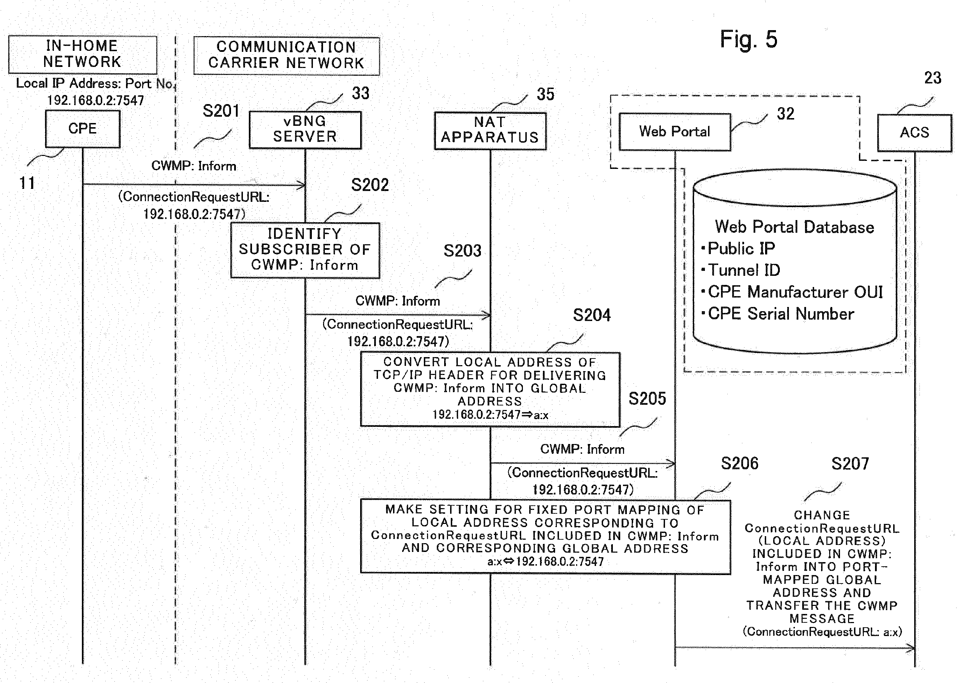

Next, an example of the operation of the communication system illustrated in Fig. 4 will be described by using a sequence diagram illustrated in Fig. 5.

The CPE 11 transmits an initial HTTP Post including CWMP: Inform message to the ACS 23 (S201). This CWMP: Inform message includes a URL (ConnectionRequestURL) necessary for the ACS 23 to request for connection to the CPE 11. The ConnectionRequestURL used herein is the local address (or a corresponding URL) of the CPE 11. For convenience of explanation, it is assumed that the ConnectionRequestURL is "192.168.0.2:7547". Further, this CWMP: Inform message used herein may be encrypted by HTTPS or the like.

The vBNG server 33 serving as the vCPE 31 identifies a subscriber of the received CWMP: Inform message (S202), and transfers IP traffic of the CWMP: Inform message, thereby transferring the CWMP: Inform message to the NAT apparatus 35 (S203).

The NAT apparatus 35 serving as the vCPE 31 receives the CWMP: Inform message transmitted from the CPE 11, and converts a transmission source local address stored in a header of a TCP/IP layer for delivering the CWMP: Inform into a global address (i.e., performs NAT processing) (S204). More specifically, the NAT apparatus 35 converts information about the transmission source address included in the header of the TCP/IP layer of the HTTP Post (CWMP: Inform) transmitted from the CPE 11 from a local address (e.g., a local IP address and a port number) to a global address (e.g., a global address and a port number). In the present example embodiment, a local address "192.168.0.2:7547" allocated to the CPE 11 is converted into a global address "a:x ("a" represents a global IP address, and "x" represents a port number)". After that, the NAT apparatus 35 transmits the HTTP Post (CWMP: Inform) including the converted global address (e.g., an IP address and a port number) to the ACS 23 (S205).

The Web Portal 32 serving as the vCPE 31 first terminates the HTTP Post (CWMP: Inform), which is transmitted from the NAT apparatus 35, by the proxy function. Further, the Web Portal 32 exchanges a message defined by the Port Control Protocol (PCP) with the NAT apparatus 35, thereby making an inquiry about a subscriber ID. Furthermore, the Web Portal 32 sets the NAT apparatus 35 in such a way as to perform fixed port mapping of the local address indicated by ConnectionRequestURL included in CWMP: Inform for each subscriber and the global address subjected to the NAT processing in S204, by using the subscriber ID for which an inquiry is made (S206). More specifically, the Web Portal 32 exchanges a message defined in the Port Control Protocol (PCP) with the NAT apparatus 35, thereby setting the NAT apparatus 35 for each subscriber in such a way as to perform fixed port mapping of the local address of the CPE 11 corresponding to ConnectionRequestURL included in CWMP: Inform to the global address subjected to the NAT processing.

Further, the Web Portal 32 changes the ConnectionRequestURL included in CWMP: Inform for the ACS 23 that is terminated by the proxy function to a global address obtained by performing fixed port mapping in S206, and transfers the CWMP: Inform to the ACS 23 (S207). When the CWMP: Inform is encrypted by HTTPS, the change is carried out by decrypting using the same certificate as that of the ACS.

### [Advantageous effects]

The configuration and operation described above enable the ACS 23 to transmit CWMP: Connection Request to the CPE 11 based on the ConnectionRequestURL included in CWMP: Inform. Further, CWMP: Connection Request transmitted to the CPE 11 is subjected to address conversion (i.e., NAT processing) from a global address (e.g., "a:x") into a predetermined local address (e.g., "192.168.0.2:7547") through fixed port mapping by the NAT apparatus 35, and thus can reach the CPE 11 on the in-home network.

Consequently, the reachability from the ACS 23 on the communication carrier network to the CPE 11 on the in-home network can be ensured.

Further, the vBNG server 33 identifies each subscriber for the CWMP: Inform transmitted by the CPE 11 and the Web Portal 32 performs fixed port mapping for each subscriber, thereby enabling the communication system according to the present example embodiment to perform a fine control for each subscriber.

Subsequently, configuration examples of the management apparatus 22 (Web Portal 32), the vCPE 21 (vCPE 31), and the ACS 23 according to each of the example embodiments described above will be described below.

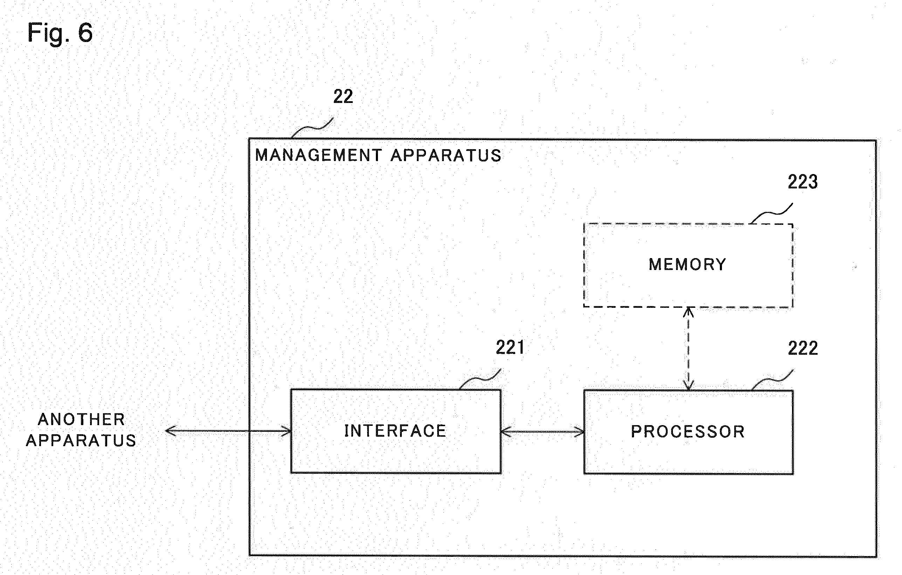

Fig. 6 is a block diagram illustrating a configuration example of the management apparatus 22.

The management apparatus 22 illustrated in Fig. 6 includes an interface 221 and a processor 222. Further, the management apparatus 22 may include a memory 223 for implementing a database capable of storing a Public IP, a Tunnel ID, a CPE Manufacturer OUI, a CPE serial Number, a subscriber ID, and the like disclosed in each of the example embodiments described above. However, it should be noted that the memory 223 is not an essential component. The interface 221 is connected to the processor 222, and has a function for communicating with other apparatuses (e.g., the vCPE 21 (or the NAT apparatus 35) and the ACS 23). More specifically, the interface 221 has a function for providing the processor 222 with information (e.g., a message) received from another apparatus, and a function for providing (transmitting) information (e.g., a message) processed by the processor 222 to another apparatus.

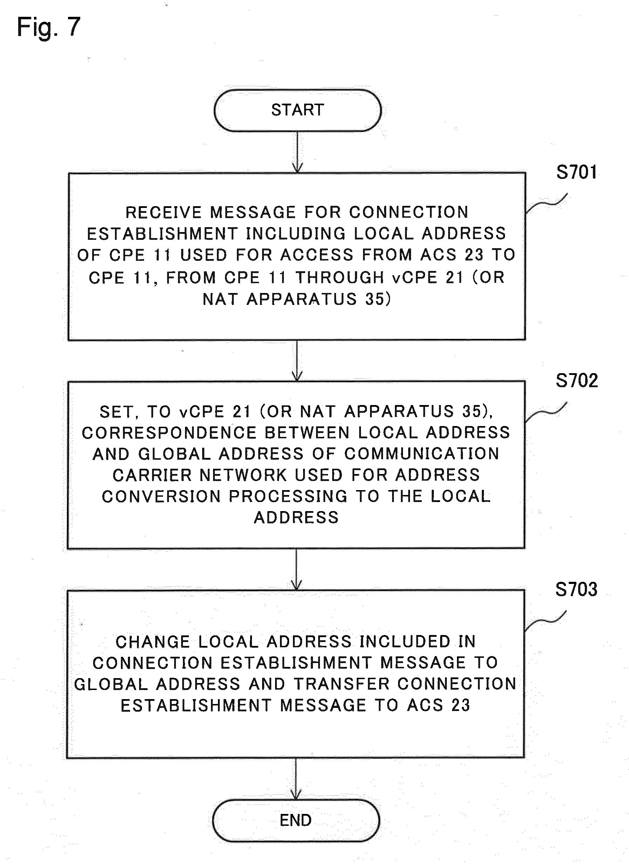

Fig. 7 is a flowchart illustrating an example of an operation of the management apparatus 22. Each step in Fig. 7 is implemented by operations of the interface 221 and the processor 222 of the management apparatus 22.

The management apparatus 22 receives, from the CPE 11 through the vCPE 21 (or the NAT apparatus 35), a message (e.g., CWMP: Inform) for connection establishment including the local address (e.g., ConnectionRequestURL) of the CPE 11 used for access (e.g., a connection request by CWMP: Connection Request) from the ACS 23 to the CPE 11 (S701).

Next, the management apparatus 22 sets, to the vCPE 21 (or the NAT apparatus 35), the correspondence between the local address of the CPE 11 and the global address of the communication carrier network used for address conversion processing to the local address (S702).

Further, the management apparatus 22 changes the local address included in the connection establishment message into a global address, and transfers the connection establishment message to the ACS 23 (S703).

Note that when the Web Portal 32 serving as the management apparatus 22 is included in the vCPE 31 as illustrated in Fig. 4, at least some of the operations in the flowchart illustrated in Fig. 7 can be carried out by the vCPE 31.

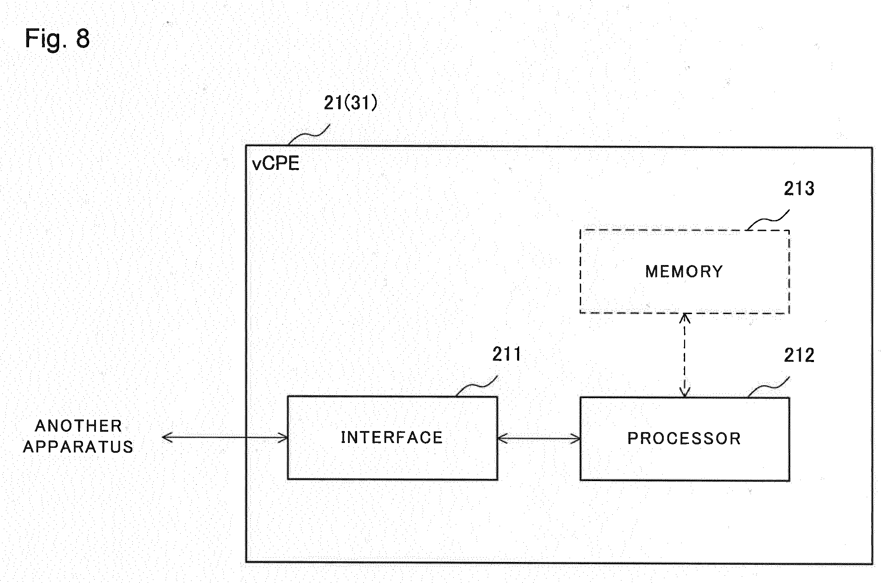

Fig. 8 is a block diagram illustrating a configuration example of the vCPE 21 (vCPE 31).

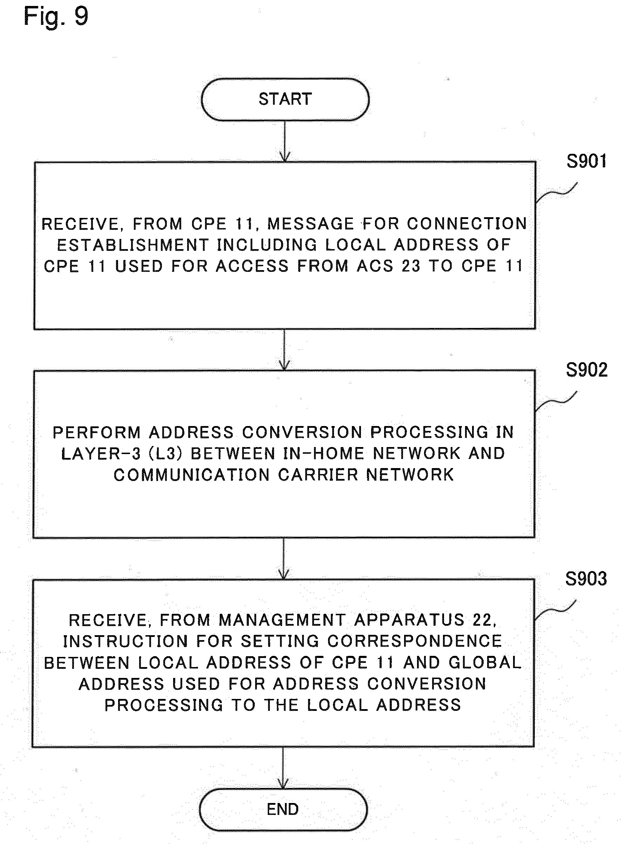

The vCPE 21 (vCPE 31) illustrated in Fig. 8 includes an interface 211 and a processor 212. Further, the vCPE 21 (vCPE 31) may include a memory 213, but is not an essential component. For example, the vCPE 21 (vCPE 31) may be configured in such a manner that the processor 212 executes a computer program stored in the memory 213. For example, the vCPE 21 (vCPE 31) may be configured to execute Virtual Machine (VM) on an Operating System (OS) executed by the processor 212 and the memory 213 in cooperation, and execute some functions (e.g., functions of the Web Portal 32, the vBNG server 33, the DHCP server 34, and the NAT apparatus 35 included in the vCPE 31) and processing (i.e., Fig. 9 and processing of the flowchart illustrated in Fig. 7 when the vCPE 31 includes the Web Portal 32) on the VM as a VM application.

The interface 211 illustrated in Fig. 8 is connected to the processor 212 and has a function for communicating with other apparatuses (e.g., the CPE 11, the vBNG server 33, and the management apparatus 22). More specifically, the interface 211 has a function for providing the processor 212 with information (e.g., a message) received from another apparatus, and a function for providing (transmitting) information (e.g., a message) processed by the processor 212 to another apparatus.

Fig. 9 is a flowchart illustrating an operation example of the vCPE 21. Each step in Fig. 9 is implemented in such a manner that the interface 211 and the processor 212 (and the memory 213) of the vCPE 21 operate in cooperation.

The vCPE 21 receives, from the CPE 11, a message (e.g., CWMP: Inform) for connection establishment including the local address (e.g., ConnectionRequestURL) of the CPE 11 used for access (e.g., a connection request by CWMP: Connection Request) from the ACS 23 to the CPE 11 (S901).

Next, the vCPE 21 performs address conversion processing in the Layer-3 (L3) between the in-home network and the communication carrier network (S902). More specifically, processing (i.e., NAT processing) for converting a local IP address which is a transmission source address, which is stored in predetermined information (e.g., a message) transmitted from the CPE 11, into a corresponding global IP address.

Further, the vCPE 21 receives, from the management apparatus 22, an instruction for setting the correspondence between the local address of the CPE 11 and the global address used for address conversion processing to the local address (S903).

Note that the vCPE 31 illustrated in Fig. 4 may carry out at least some of the operations in the flowchart illustrated in Fig. 7, in addition to the flowchart illustrated in Fig. 9.

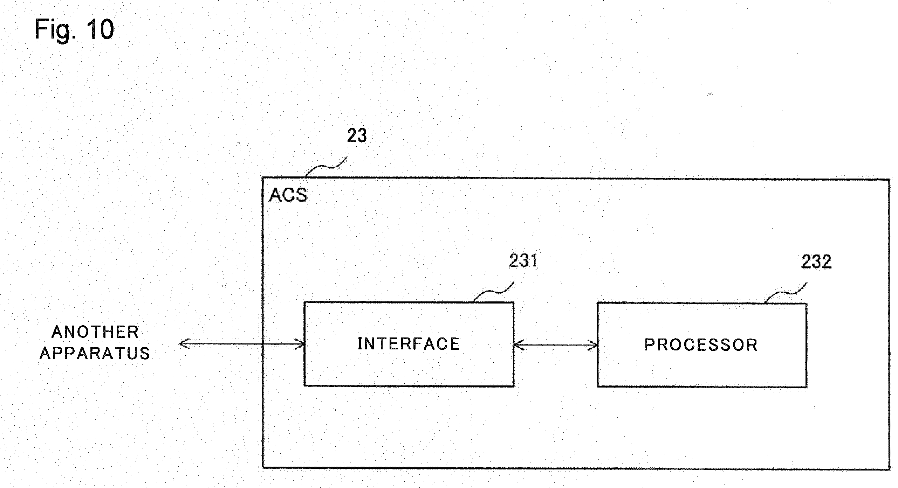

Fig. 10 is a block diagram illustrating a configuration example of the ACS 23.

The ACS 23 illustrated in Fig. 10 includes an interface 231 and a processor 232. Note that the ACS 23 may include a memory which is not illustrated. The interface 231 is connected to the processor 232 and has a function for communication with other apparatuses (e.g., the Web Portal 32, the CPE 11, and the vCPE 21). More specifically, the interface 231 has a function for providing the processor 232 with information (e.g., a message) received from another apparatus, and a function for providing (transmitting) information (e.g., a message) processed by the processor 232 to another apparatus.

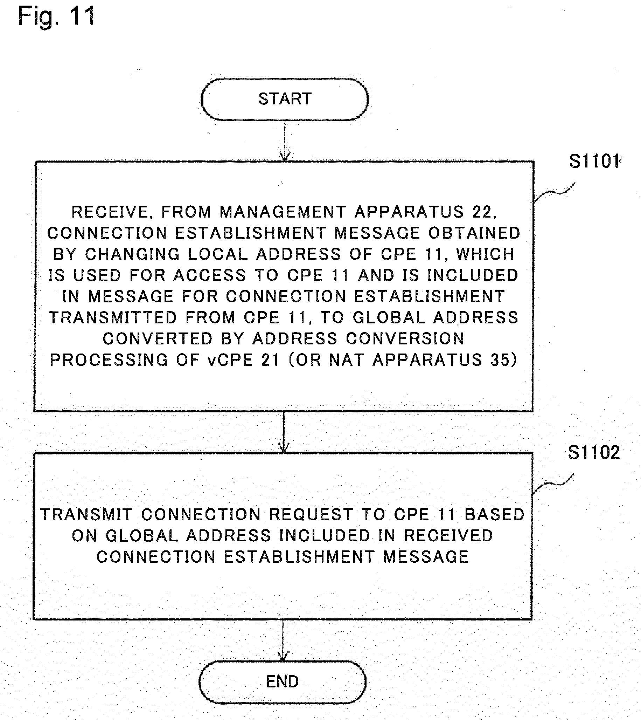

Fig. 11 is a flowchart illustrating an operation example of the ACS 23. Each step in Fig. 11 is implemented by operations of the interface 231 and the processor 232 of the ACS 23.

The ACS 23 receives, from the management apparatus 22, a connection establishment message obtained by changing the local address (e.g., ConnectionRequestURL) of the CPE 11 which is used for access (e.g., a connection request by CWMP: Connection Request) to the CPE 11 and which is included in the message (e.g., CWMP: Inform) for connection establishment transmitted from the CPE 11 into the global address converted by address conversion processing of the vCPE 21 (or the NAT apparatus 35) (S1101).

Next, the ACS 23 transmits a connection request to the CPE 11 based on the global address included in the received connection establishment message (S1102).

As described above by using Figs. 6 to 11, each of the processors included in the management apparatus 22 (Web Portal 32), the vCPE 21 (vCPE 31), and the ACS 23 according to the example embodiments described above executes one or more programs including an instruction set for causing a computer to execute algorithms described above by using the flowcharts. This program can be stored and provided to a computer by using various types of non-transitory computer readable media. Non-transitory computer readable media include various types of tangible storage media. Examples of non-transitory computer readable media include magnetic storage media (e.g., flexible disks, magnetic tapes, and hard disk drives), optical magnetic storage media (e.g., magneto-optical disks), Compact Disc Read Only Memory (CD-ROM), CD-R, CD-R/W, and semiconductor memories (e.g., mask ROM, Programmable ROM (PROM), Erasable PROM (EPROM), flash ROM, and Random Access Memory (RAM)). The program may be provided to a computer by using various types of transitory computer readable media. Examples of transitory computer readable media include electric signals, optical signals, and electromagnetic waves. Transitory computer readable media can provide the program to a computer via a wired communication line, such as an electric wire and an optical fiber, or a wireless communication line.

### <Other example embodiments>

The example embodiments described above may be respectively carried out independently, or may be carried out in combination as needed.

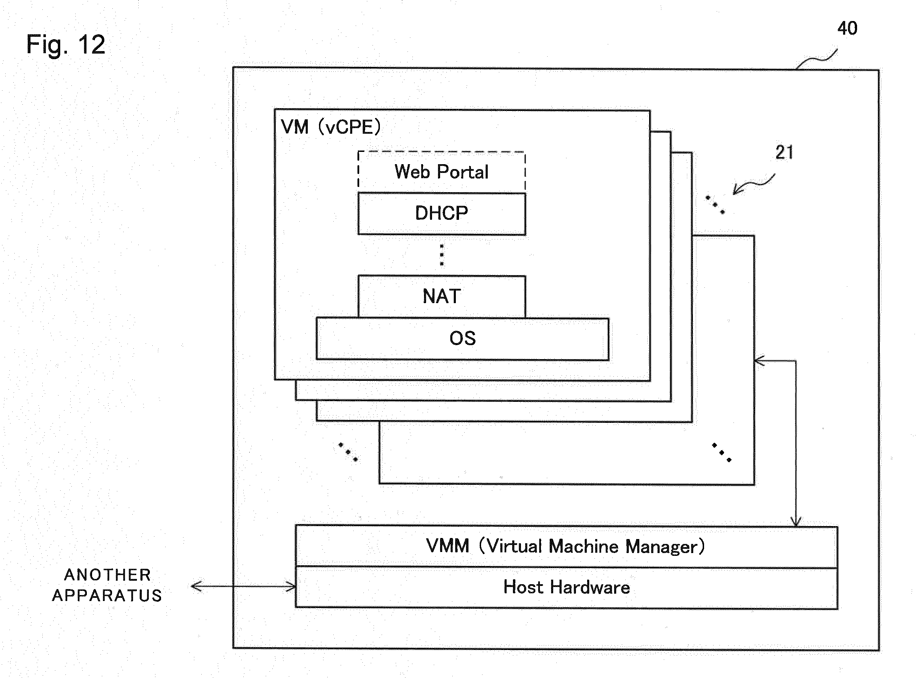

Each node on the communication carrier network described in the example embodiments described above may have a configuration as illustrated in Fig. 12. Specifically, as illustrated in the configuration example of Fig. 12, a VM which is virtually implemented by a VMM (Virtual Machine Manager or Virtual Machine Monitor) on a Host Hardware of a server apparatus 40 may be provided for each subscriber, and the VM may be configured to execute operations of the vCPE 31 illustrated in Fig. 4 (i.e., operations of the NAT apparatus 35, the Web Portal 32, and the like) as a VM application. Note that the number of VMs in the configuration example of Fig. 12 need not necessarily correspond to the number of subscribers stored by the communication carrier.

Additionally or alternatively, also in the configuration example illustrated in Fig. 12, like in some example embodiments described above, some of the functions (e.g., a Web Portal function) may be executed by an independent apparatus disposed outside the server apparatus 40.

Additionally or alternatively, the function corresponding to the vBNG server 33 illustrated in Fig. 4 need not be an essential function in the configuration example illustrated in Fig. 12.

Furthermore, the example embodiments described above are merely examples of application of the technical ideas obtained by the present inventor. Needless to say, the technical ideas are not limited to only the example embodiments described above and various modifications can be made thereto.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2016-057759, filed on March 23, 2016, the disclosure of which is incorporated herein in its entirety by reference.

### [Reference signs List]

- 1: In-home network
- 2: Communication carrier network
- 11: CPE
- 12: In-home apparatus
- 21: vCPE
- 22: Management apparatus
- 23: ACS
- 31: vCPE
- 32: Web Portal
- 33: vBNG server
- 34: DHCP server
- 35: NAT apparatus
- 40: Server apparatus
- 221: Interface
- 222: Processor
- 223: Memory
- 211: Interface
- 212: Processor
- 231: Interface
- 232: Processor

## Claims

1. A management apparatus that is installed on a communication carrier network in a communication system, the communication system including Layer-2 Customer Premises Equipment (L2CPE) installed on an in-home network and configured to perform processing in a Layer-2 (L2) with the communication carrier network, Layer-3 CPE (L3CPE) installed on the communication carrier network and configured to perform address conversion processing in a Layer-3 (L3) with the in-home network, and Auto Configuration Servers (ACS) installed on the communication carrier network and configured to support a predetermined protocol for establishing a connection with the L2CPE,
the management apparatus comprising:
an interface configured to receive, in an in-home network, a message for establishing the connection from the L2CPE through the L3CPE, the message including a local address used for access to the L2CPE; and
a processor configured to set, to the L3CPE, a correspondence between the local address and a global address of the communication carrier network used for the address conversion processing to the local address,
wherein the interface changes the local address included in the message to the global address and transfers the message to the ACS.

2. The management apparatus according to claim 1,
wherein the local address is an IP address and a port number of the L2CPE being used in the in-home network, and the global address is an IP address and a port number of the L2CPE being used in the communication carrier network, and
wherein the address conversion processing is processing of one of port mapping, Network Address Translation (NAT), and IP masquerade.

3. The management apparatus according to claim 1 or 2,
wherein the L3CPE is a virtual CPE (vCPE) virtually implemented on a server installed on the communication carrier network.

4. The management apparatus according to any one of claims 1 to 3,
wherein the L2CPE is a CPE installed on an in-home network, operating in a bridge mode for processing of the L3, and
wherein the L3CPE performs processing of the L3 in place of the L2CPE.

5. The management apparatus according to any one of claims 1 to 3,
wherein the predetermined protocol is a CPE Wide Area Network (WAN) Management Protocol (CWMP) of Technical Report (TR)-069,
wherein the access is a connection request by Connection Request defined in the CWMP,
wherein a local address included in the message for establishing the connection is ConnectionRequestURL (Uniform Resource Locator) defined in the CWMP, and
wherein the message for establishing the connection is an Inform message defined in the CWMP.

6. The management apparatus according to any one of claims 1 to 4, further comprising:
a display apparatus configured to display, for a user, a setting screen for making a setting for the L3CPE; and
an input interface configured to receive an input of a setting for the L3CPE from a user.

7. A control method for a management apparatus that is installed on a communication carrier network in a communication system, the communication system including Layer-2 Customer Premises Equipment (L2CPE) installed on an in-home network and configured to perform processing in a Layer-2 (L2) with the communication carrier network, Layer-3 CPE (L3CPE) installed on the communication carrier network and configured to perform address conversion processing in a Layer-3 (L3) with the in-home network, and Auto Configuration Servers (ACS) installed on the communication carrier network and configured to support a predetermined protocol for establishing a connection with the L2CPE,
the control method comprising:
receiving, in an in-home network, a message for establishing the connection from the L2CPE through the L3CPE, the message including a local address used for access to the L2CPE;
setting, to the L3CPE, a correspondence between the local address and a global address of the communication carrier network being used for the address conversion processing to the local address; and
changing the local address included in the message to the global address and transferring the message to the ACS.

8. A Layer-3 Customer Premises Equipment (L3CPE) that is installed on a communication carrier network in a communication system, the communication system including Layer-2 Customer Premises Equipment (L2CPE) installed on an in-home network and configured to perform processing in a Layer-2 (L2) with the communication carrier network, and Auto Configuration Servers (ACS) installed on the communication carrier network and configured to support a predetermined protocol for establishing a connection with the L2CPE,
the L3CPE comprising:
an interface configured to receive, from the L2CPE, a message for establishing the connection, the message including a local address used for access to the L2CPE; and
a processor configured to perform address conversion processing in a Layer-3 (L3) between the in-home network and the communication carrier network,
wherein the interface receives, from a management apparatus installed between the ACS and the L3CPE, an instruction for setting a correspondence between the local address and a global address used for the address conversion processing to the local address.

9. A control method for a Layer-3 Customer Premises Equipment (L3CPE) that is installed on a communication carrier network in a communication system, the communication system including Layer-2 Customer Premises Equipment (L2CPE) installed on an in-home network and configured to perform processing in a Layer-2 (L2) with the communication carrier network, and Auto Configuration Servers (ACS) installed on the communication carrier network and configured to support a predetermined protocol for establishing a connection with the L2CPE,
the control method comprising:
receiving, from the L2CPE, a message for establishing the connection, the message including a local address used for access to the L2CPE;
performing address conversion processing in a Layer-3 (L3) between the in-home network and the communication carrier network; and
receiving, from a management apparatus installed between the ACS and the L3CPE, an instruction for setting a correspondence between the local address and a global address used for the address conversion processing to the local address.
